# EUROPEAN PATENT APPLICATION

(11) **EP 1 209 126 A2**
(43) Date of publication of application: **29.05.2002**
(21) Application number: 01127871.0
(22) Date of filing: 22.11.2001
(51) Int. Cl.: C02F 5/04, C02F 5/08, B01D 35/30

(54) **Water treatment device and a universal housing adaptor**

(30) Priority: 23.11.2000 IL 13989200
(71) Applicant: Tsabari, Yigal, 99750 (IL)
(72) Inventor: Tsabari, Yigal, 99750 (IL)
(74) Representative: Becker Kurig Straus

(57) **Abstract**

A water treatment device including: (a) a compartment for containing a water treatment chemical; (b) a filtration unit operatively connected and fluidly communicating with the first compartment; (c) a housing containing the compartment and the filtration unit; (d) a first opening in the housing for introducing feed water into the housing; (e) a second opening in the housing for discharging treated water therethrough, and (f) at least one sealing element, disposed within the housing, so as to fluidly seal between the feed water and the treated water.

## Description

### FIELD AND BACKGROUND OF THE INVENTION

The present invention relates to an apparatus for the improvement of water quality in both domestic and industrial settings, and, in particular, to a universal adaptor for adapting the inner workings of such an apparatus to existing housings of various dimensions.

Municipal and industrial waters contain objectionable impurities, commonly referred to as hardness, which are the cause of processing problems such as scaling. Scaling is usually due to the presence of calcium and magnesium salts in the water. In both natural and industrial waters, these salts are present in various forms, including the relatively soluble calcium and magnesium bicarbonates (Ca(HCO₃)₂ and Mg(HCO₃)₂). Upon heating, carbon dioxide is released, precipitating calcium and magnesium carbonates (CaCO₃ and MgCO₃). Since the scale forms more rapidly when water is heated, the problem of scaling is particularly troublesome in water heaters and hot water systems.

The scale precipitation is predominantly on the available surface area -- the inner surfaces of the pipes, coils and collecting tanks, boilers, cooling towers, shower walls, glass, sinks, etc., and upon existing layers of scale previously deposited on the surfaces. The hardness of the scale greatly promotes the attrition of faucets, valves, and pumps. Scale formation is the main problem affecting water-heating plants, in both domestic and industrial settings, causing serious operating problems and increasing utility and/or maintenance costs.

Of the many methods of water treatment, treatment with polyphosphates is potentially one of the most simple, effective and economical ways of solving the problems caused by water hardness, and is effective at temperatures up to about 80°C. The action of the polyphosphate is based on the ability of polymer phosphates to be absorbed by the peripheral surfaces of calcite and magnesite crystallization nuclei, hence forming a protective film that prevents the nuclei from bonding together and thereby preventing the precipitation that causes scale deposits. Thus, even though water treated with polyphosphates retains the original hardness, the formation of damaging incrustations caused by calcareous deposits is inhibited.

Polyphosphates also work on the inner metal surfaces of the piping system, forming a very fine protective film that insulates the surfaces and protects them against corrosion

A method and apparatus for dispensing polyphosphates in industrial applications is known. The feed water flows through a bed containing polyphosphate particles. Since the concentration of dissolved polyphosphate depends on the water flow rate, such a dosing system cannot ensure a relatively constant polyphosphate concentration. Health considerations have prompted various regulatory agencies to place an upper limit of 5 mg/liter on the polyphosphate content in municipal water, hence this method is not the most suitable for drinking water and similar domestic applications.

Industrial systems are often very sensitive to particulate matter in the water. The above method does not relate to the presence of insoluble matter in the feed water, and, in addition, the dispensing of polyphosphate results in the entrainment of polyphosphate particles which actually increases the amount of particulate matter in the water. The problem is particularly acute at high flowrates. As a result, an additional filtration unit must be installed to prevent damage to processes and to process equipment.

Various methods and devices for dispensing polyphosphates in municipal water are known. A particularly compact, efficient, and reliable apparatus for dispensing the polyphosphate is the subject of my U.S. Patent U.S. Patent No. 6,270,664. The apparatus features inner workings containing a polyphosphate dosing unit and a filtration unit situated within a cylindrical housing designed especially for the inventive inner workings. The inner workings, however, are incompatible with housings of similar water treatment devices. It must be further emphasized that the housings of many water treatment devices are of non-standard dimensions (length, inside diameter, outside diameter, etc.), such that is usually impossible to fit the inner workings of a particular make or model into the housing of a different make or model. Many domestic and industrial consumers already have one or more water treatment units, which they would like to replace with an improved unit, like those disclosed in my above-mentioned co-pending application. This necessitates, however, replacement of the entire unit, including the housing.

Thus, there is a great need for, and it would be highly advantageous to have, a device that would adapt inner workings of various kinds to housings of standard and non-standard dimensions and design.

### SUMMARY OF THE INVENTION

According to the teachings of the present invention there is provided a water treatment system and a universal adaptor therefor, wherein the universal adaptor allows the inner workings of a given water treatment system to be made compatible with available housings of standard and non-standard dimensions.

Thus, according to one aspect of the present invention there is provided a universal housing adaptor for adapting between an inner workings of a water treatment unit and a housing unit and sealing between an inner compartment and an outer compartment, the adaptor including: (a) a spring disposed within the housing unit, and (b) a sealing ring disposed between the inner workings and a head of the housing unit, wherein the spring operatively applies a force on the sealing ring, such that the sealing ring provides a seal between the inner workings and the head, such that the inner compartment and the outer compartment are substantially separated and non-communicable.

According to another aspect of the present invention there is provided a housing adaptor for a water treatment unit having a cylindrical housing, a housing head having a central tube having an opening, an inner workings, and a seal between the inner workings and the housing head, the housing adaptor including: (a) a central pipe for the flow of liquid therethrough; (b) an outer spring encompassing the pipe; (c) a support for the outer spring encompassing the central pipe, and (d) a flexible seal affixed to the support, the flexible seal sealing between the support and the cylindrical housing.

According to further features in the described preferred embodiments, the housing adaptor of the present invention further includes: (e) an inner spring within the central pipe; (f) a inner spring support; the inner spring resting on the support; and (g) a seal affixed to the inner spring, the seal sealing between the central pipe and the central tube of the housing head.

According to still further features in the described preferred embodiments, the central pipe is substantially cylindrical.

According to still further features in the described preferred embodiments, the central pipe encompasses the opening of the central tube of the housing head.

According to still further features in the described preferred embodiments, the support for the outer spring has at least one passageway for the flow of liquid therethrough.

According to still further features in the described preferred embodiments, the seal affixed to the inner spring is held in place by the inner spring within the central pipe.

According to still further features in the described preferred embodiments, the central pipe includes: (i) an upper segment; and (ii) a lower segment having a base for the outer spring, wherein the upper segment and the lower segment are connected by the support for the outer spring such that the upper segment is free to rotate, and wherein the outer spring is situated between the base for the outer spring and the support for the outer spring, such that the outer spring pushes off against the lower segment and against the support.

According to still further features in the described preferred embodiments, the above-described housing adaptor having a segmented central pipe further includes: (e) an inner spring within the central pipe; (f) an inner spring support; the inner spring resting on the support; and (g) a seal affixed to the inner spring support, the seal sealing between the inner spring support and the central tube of the housing head.

According to still further features in the described preferred embodiments, the housing adaptor further includes: (h) a handle protruding outside of the housing head; (i) a shaft connecting the handle to the upper segment by means of the central tube; and (j) a brush, encompassing the upper segment, wherein the handle is activated to rotate the shaft, the upper segment, and the brush.

According to another aspect of the present invention there is provided a housing adaptor for a water treatment unit having a cylindrical housing containing an upper compartment containing a filtration unit, a lower compartment containing a water treatment chemical such as polyphosphate, a housing head having a central tube having an opening for the flow of feed water therethrough, an inner workings, and a seal between the inner workings and the housing head, the housing adaptor including: (a) a central pipe for the flow of water therethrough; (b) an outer spring encompassing the central pipe; (c) a support for the outer spring encompassing the central pipe, the support having at least one passageway for the flow of liquid therethrough; (d) a flexible seal affixed to the support, the flexible seal sealing between the support and the cylindrical housing; (e) an inner spring within the central pipe; (f) an inner spring support; the inner spring resting on the support; and (g) a seal affixed to the inner spring support, the seal sealing between the central pipe and the central tube of the housing head, such that substantially all the feed water introduced through the central tube flows through the central pipe and into the lower compartment containing the water treatment chemical, through the at least one passageway in the support, into the upper compartment containing a filtration unit, and through the filtration unit before leaving the water treatment unit.

According to further features in the described preferred embodiments, the housing adaptor allows substantially no leakage between the support and the cylindrical housing, and between the central pipe and the central tube of the housing head.

According to another aspect of the present invention there is provided a water treatment device including: (a) a compartment containing a water treatment chemical; (b) a filtration unit operatively connected and fluidly communicating with the first compartment; (c) a housing containing the compartment and the filtration unit; (d) a first opening in the housing for introducing feed water into the housing; (e) a second opening in the housing for discharging treated water therethrough, and (f) at least one sealing element, disposed within the housing, so as to fluidly seal between the feed water and the treated water.

According to further features in the described preferred embodiments, the sealing element is a single sealing element.

According to further features in the described preferred embodiments, the water treatment device further includes: (g) a spring, disposed within the housing so as to provide pressure on the at least one sealing element.

According to further features in the described preferred embodiments, the at least one sealing element is disposed between the compartment and a head of the housing, to provide a fluid seal between the feed water and the treated water.

According to further features in the described preferred embodiments, the compartment, the filtration unit, and the sealing element are mounted in an integral, self-contained unit for insertion to and removal from the housing.

According to further features in the described preferred embodiments, the compartment and the filtration unit are substantially concentric, with the filtration unit surrounding the compartment.

According to further features in the described preferred embodiments, substantially all of the feed water enters the compartment before undergoing filtration in the filtration unit.

According to further features in the described preferred embodiments, the inner workings of the water treatment device include the compartment, the filtration unit, and the sealing element, and wherein the inner workings are designed and configured so as to be substantially universally adaptable to housings of different heights and widths.

According to further features in the described preferred embodiments, the inner workings of the water treatment device include the compartment, the filtration unit, and the sealing element, and wherein the inner workings are designed and configured to be reversibly detachable from the housing as an integral unit.

According to further features in the described preferred embodiments, the compartment is a simply connected body, in a topological sense, such that a central region of the compartment can be filled with polyphosphates or water treatment chemicals.

According to further features in the described preferred embodiments, the filtration unit is selected from the group consisting of a screen filter and a ring filter, and wherein the inner workings are designed and configured for interchangeable connection of the screen filter and the ring filter to the inner workings.

According to further features in the described preferred embodiments, the compartment and the filtration unit are substantially concentric, with the filtration unit surrounding a portion of the compartment.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

The principles and operation of the water treatment system adaptor according to the present invention, as well as the advantages of the system relative to known art, may be better understood with reference to the drawings and the accompanying description, wherein:
FIG. 1 is a schematic drawing of a water treatment unit having a polyphosphate compartment and an integrated filtration unit (as disclosed in my U.S. Patent No. 6,270,664);
FIG. 2 illustrates an apparatus according to known art with proportional dosing;
FIG. 3 is a schematic cross-sectional view of an embodiment of the housing adaptor according to the present invention;
FIG. 4A is a schematic cross-sectional view of an embodiment of the housing adaptor according to the present invention, inserted into a dual-function water treatment unit having a lower polyphosphate bed compartment and an upper filtration compartment;
FIG. 4B is a schematic cross-sectional view of the housing adaptor of FIG. 4A, inserted into a housing that is shorter and narrower than the housing of FIG. 4A;
FIG. 5 is a schematic cross-sectional view of an embodiment of the housing adaptor according to the present invention, in which the cylindrical pipe is made of two segments;
FIG. 6 is a schematic cross-sectional view of the housing adaptor of FIG. 5, additionally equipped with a self-cleaning device including a cylindrical brush encompassing the upper pipe segment and a handle;
FIG. 7 is a schematic cross-sectional view of the housing adaptor of FIG. 6, inserted into a dual-function water treatment unit having a lower polyphosphate bed compartment and an upper filtration compartment;
FIG. 8a is a cut open view of an embodiment of an inner workings of a water treatment unit having a housing adaptor mechanism, according to the present invention;
FIG. 8b is a schematic cross-section of inner workings of the present invention, inserted into a generic housing of a commercially-available type water treatment unit;
FIG. 9a is a variation of FIG. 8a, in which the polyphosphate is disposed in a top compartment and the filtration unit is disposed in a bottom compartment;
FIG. 9b is a schematic cross-section of the inventive inner workings of FIG. 9a, inserted into a generic housing of a commercially-available type water treatment unit;
FIG. 10 is a schematic cross-section of a water treatment unit in which the polyphosphate compartment protrudes into the hollow volume of the cylindrical filter, and
FIG. 11 is a variation of FIG. 10, in which the filtration unit includes a ring filter that is interchangeable with the cylindrical filter of FIG. 10.

### DESCRIPTION OF THE PREFERRED EMBODIMENTS

According to the teachings of the present invention there is provided a water treatment system and a universal adaptor therefor, wherein the universal adaptor allows the inner workings of a given water treatment system to be made compatible with available housings of standard and non-standard dimensions.

The principles and operation of the device according to the present invention may be better understood with reference to the drawings and the accompanying description.

Before explaining at least one embodiment of the invention in detail, it is to be understood that the invention is not limited in its application to the details of construction and the arrangement of the components set forth in the following description or illustrated in the drawing. The invention is capable of other embodiments or of being practiced or carried out in various ways. Also, it is to be understood that the phraseology and terminology employed herein is for the purpose of description and should not be regarded as limiting.

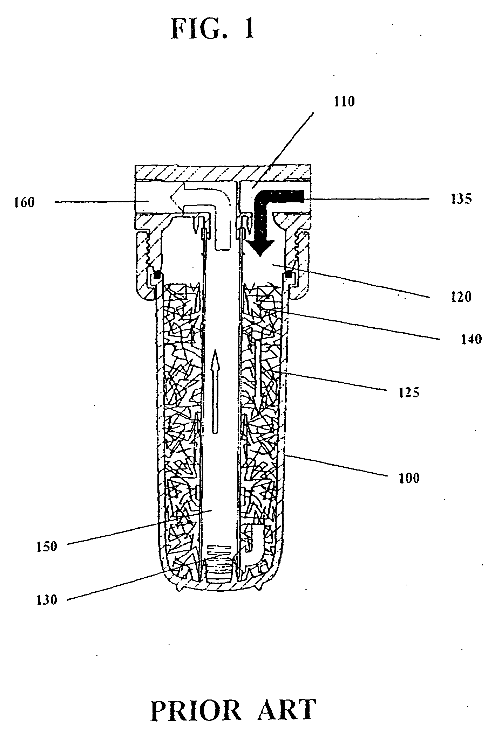

Referring now to the drawings, FIG. 1 is a schematic drawing of one embodiment of an apparatus having a polyphosphate compartment and an integrated filtration unit as disclosed in my co-pending application 09/427,613. The entire stream of feed water is contacted with the bed of polyphosphate crystals, a typical method for the treatment of industrial water.

The apparatus features a cylindrical housing **300** with a central tube **350** along the length of the cylinder. The annular region around the tube **320** is loaded with polyphosphate particles to form a bed **340**. Feed water enters the unit via the inlet chamber **310**, passing through the central inlet **396** of the housing head **397**, and into the central tube **350**. A seal ring **398** seals the space between the the central inlet **396** of the housing head **397** and the central tube **350**, and prevents leaking. At the tube bottom **350**, a slitted grating **330** allows the water to enter the annular region **320** containing the polyphosphate bed **340**. The water passing through the bed **340** dissolves a small amount of polyphosphate. Above the polyphosphate bed **340** is fixed a partition **375**, dividing between the polyphosphate bed compartment **315** and the filtration compartment **365** above. The partition **375** is in the shape of a ring, with ample clearance space provided for both the central tube **350** and for the upwards-flowing stream **335** containing dissolved polyphosphate.

The stream containing dissolved polyphosphate enters the inner annulus **385** of the filtration compartment, bounded by the central tube and by the inside of the cylindrical screen **390**. The water passes through the screen **390**, leaving behind insoluble matter and entrained polyphosphate particles.

The filtered, polyphosphate-containing water flows up **305** through the outer annulus of the filtration compartment **395** and is discharged from the unit from the outlet chamber **360**.

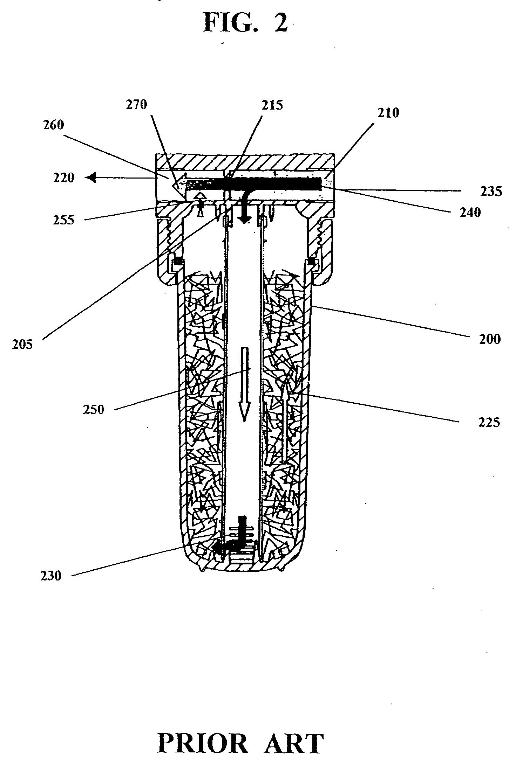

FIG. 2 illustrates a different water treatment apparatus having a proportional dosing mechanism. The apparatus is typically used for treating municipal (drinking-quality) water. The feed water **235** enters the unit via the inlet chamber **210**. The inlet chamber narrows suddenly at **215**, creating a high-pressure zone. The pressure forces a very small portion of the water to pass through a narrow orifice **205** and into the central tube **250** running parallel to the length of the housing cylinder **200**. At the bottom of the tube **250**, the water enters the annular polyphosphate bed **240** via a slitted grating **230**. As the water flows up **225** through the bed **240**, polyphosphate is dissolved. Since the flow rate is extremely low, the residence time is high enough for the water to become substantially saturated with respect to polyphosphate. The polyphosphate-saturated water flows into the outlet chamber **260** via a narrow orifice **255**. The high velocity of the main water flow **270** passing by the orifice creates a low-pressure zone, drawing a relatively small flow of polyphosphate-saturated water through the orifice **255** and into the main stream **270**. Thus, under ideal conditions, the amount of dissolved polyphosphate in the outlet stream **220** is roughly proportional the water flow rate, such that concentration of dissolved polyphosphate is relatively constant. It should be noted that in this design, the bulk of the feed water flows through the system without contacting the bed of polyphosphate particles.

It is evident from the above-described water treatment devices that the housings are custom-made for the inner workings. Although many housings have fairly similar dimensions, they tend to differ in several ways:
■ housing height
■ housing width, i.e., the inside diameter of the cylindrical housing
■ central tube height and diameter (for those devices having a central tube serving as an inlet tube or as an outlet tube)
The inner surface of the housing may also have various customized fittings, protrusions, grooves, etc., with which the housing receives the inner workings.

Consequently, the inner workings of one device are generally incompatible with the housing of another device, however similar they appear to be.

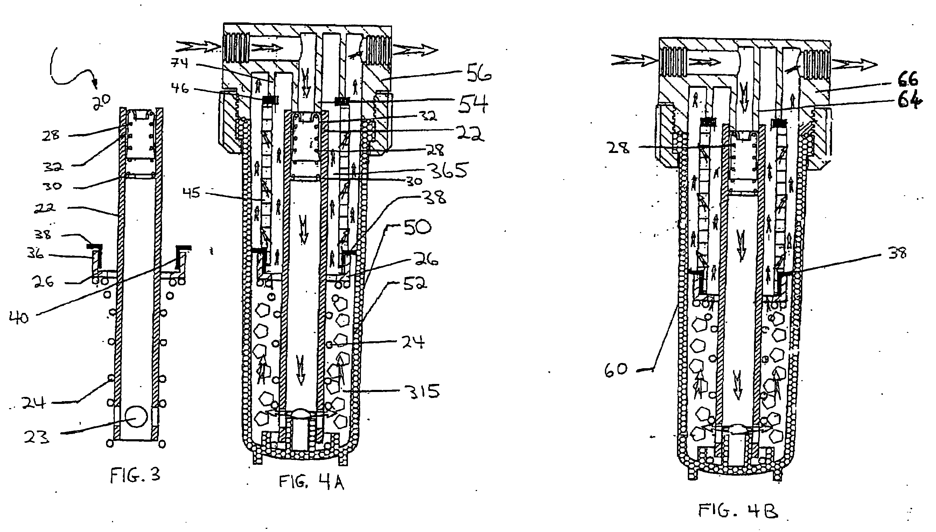

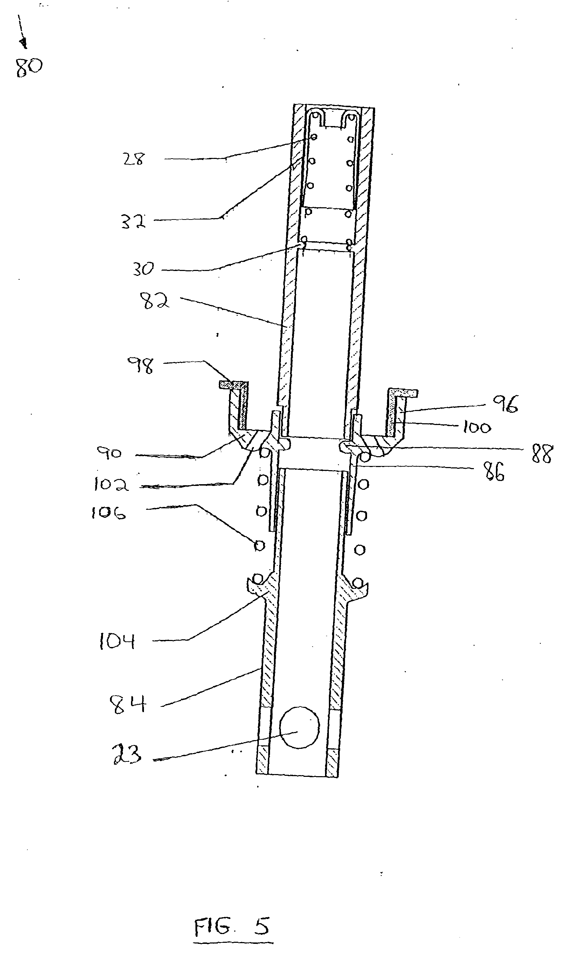

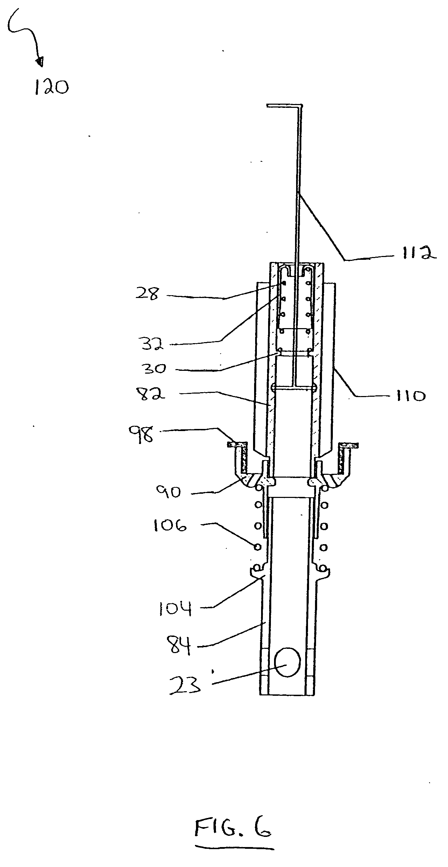

FIG. 3 illustrates an embodiment of the housing adaptor **20** according to the present invention. The adaptor **20** consists of a cylindrical pipe **22** having an outlet port **23**, an outer spring **24** encompassing the lower section of the pipe **22**, a concentric annular support **26** encompassing the pipe **22**, an inner spring **28** located inside the pipe **22** towards the top of the pipe **22,** a ring-shaped support **30** underneath inner spring **28**, and a seal **32** situated above and around inner spring **28** such that seal **32** is held in place by spring **28**. The inside surface of annular support **26** is set at a distance from the outer wall of cylindrical pipe **22**, such that an annular space **34** is provided for the flow of liquid therethrough. Annular support **26** has a narrow, cylindrical protrusion **36** protruding from the top side of the support **26**, on which is situated a flexible seal **38**. Flexible seal **38** has an inner lip **40** extending downward along the inside surface of the narrow, cylindrical protrusion **36**.

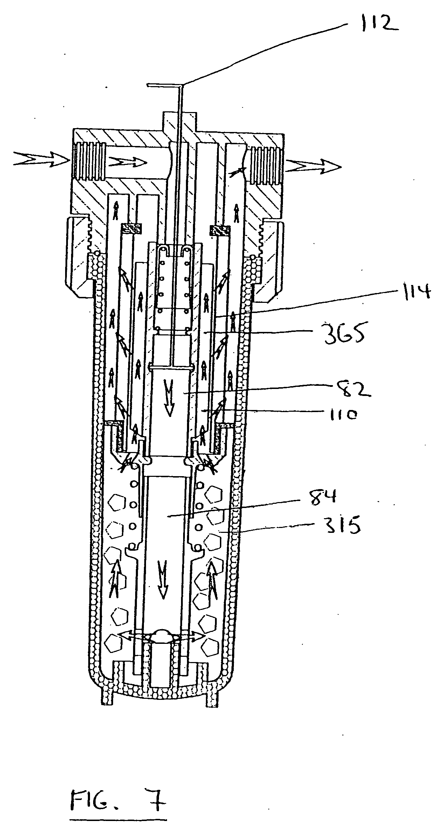

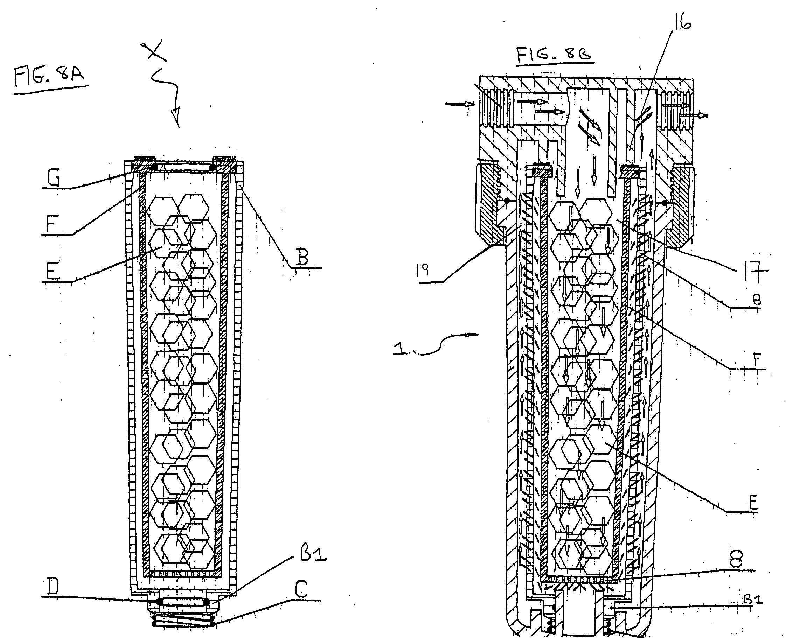

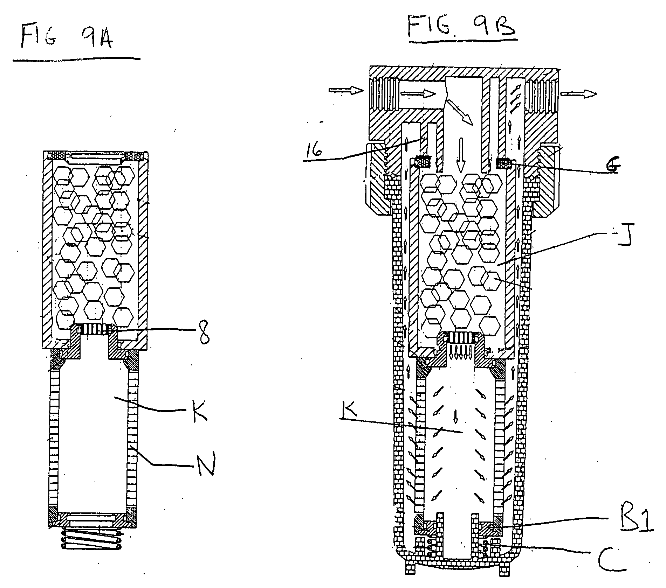

The operation of the above-described embodiment of the adaptor of the present invention is illustrated in FIG. 4A and FIG. 4B. In FIG. 4A, the polyphosphate bed compartment **315** and the filtration compartment **365** of the device illustrated in FIG. 1 are situated in a housing **50** that was manufactured to suit an inner workings that are of long and wide dimensions, relative to most common housings.

It is evident (though not shown) from FIG. 4A that without proper sealing along the inside surface **52** of the housing **50**, the liquid in the polyphosphate bed compartment **315** will bypass the filtration compartment **365**, leaving the device in an unfiltered state. It is further evident that without proper sealing between the inlet tube **54** of the housing head **56** and the cylindrical pipe **22**, a large portion of the feed water will leak between the inlet tube **54** and the cylindrical pipe **22** directly into the filtration compartment **365** instead of entering the polyphosphate bed compartment **315**. Thus, the use of a particular inner workings with a housing designed for a different inner workings is generally not feasible.

The use of the housing adaptor **20** of the present invention, however, overcomes the above-mentioned problems, as is illustrated in FIG. 4A. In FIG. 4A, the housing adaptor **20** is inserted into a dual-function water treatment unit having a lower polyphosphate bed compartment **315** and an upper filtration compartment **365**, in which housing adaptor **20** also serves as a partition between the compartments **315**, **365**.

The outer spring **24** encompassing the lower section of the pipe **22** pushes up against concentric annular support **26** encompassing the pipe **22**. As a result, the narrow, cylindrical protrusion **36** protruding from the top side of the support **26** pushes against flexible seal **38**, such that good sealing contact is made between the seal **38** and the inner wall **52** of the cylindrical housing **50**. This prevents liquid in the polyphosphate bed compartment **315** from bypassing the filtration compartment **365**. In addition, the action of outer spring **24** pushing up against concentric annular support **26** causes seal **38** and to push against cylindrical filter **45**, which in turn pushes up against ring seal **46**, such that sealing is effected between cylindrical filter **45** and the outer cylinder **74** of housing head **56.** As a result, the liquid on the inside of cylindrical filter **45** is forced to pass through the filter **45** without undesirable by-passing.

The inside diameter of cylindrical pipe **22** is slightly larger than the outside diameter of substantially all inlet tubes, including the inlet tube **54** provided in FIG. 4A. Inner spring **28**, located inside cylindrical pipe **22** towards the top of the pipe **22**, pushes off against a ring-shaped support **30** at the base of inner spring **28**, such that pressure is exerted on seal **32** situated above and around inner spring **28**. Seal **32**, in turn, is pressed against the opening of the inlet tube **54** of the housing head **56**, such that the feed water has no way of bypassing the cylindrical pipe **22**, and is introduced directly into the filtration compartment **365**.

In FIG. 4B, the housing adaptor **20** of the present invention is inserted into a housing **60** that is shorter and narrower than the housing **50** of FIG. 4A. This is evident from the bending and compression of flexible seal **38**, which compensates for the narrowness of the housing **60**, and from the compression of inner spring **28**, which compensates for the short distance between the opening of the inlet tube **64** of the housing head **66** and the bottom of the cylindrical housing **60**.

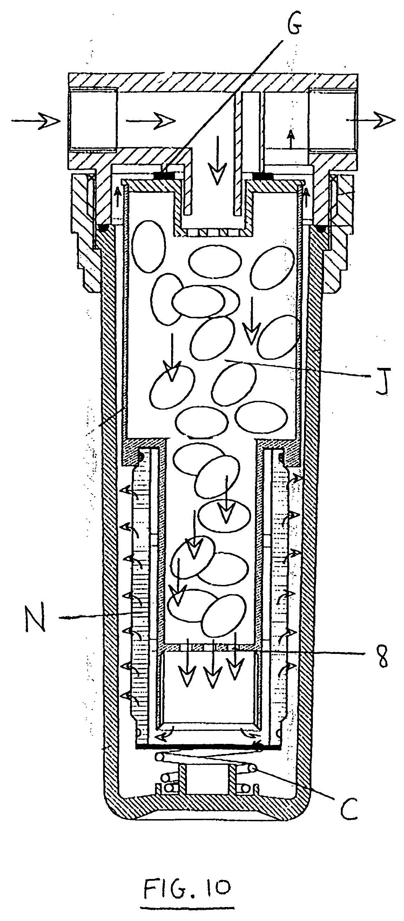

In some cases, it is advantageous for the cylindrical pipe to be constructed from two independent segments that are fitted together. Thus, in another aspect of the present invention, provided in FIG. 5, the housing adaptor **80** has a cylindrical pipe made of two segments, an upper segment **82** and a lower segment **84**, connected by a central support **86**. Central support 86 is basically of cylindrical shape and co-axial with upper segment **82** and lower segment **84.** Central support **86** is provided with a ring-shaped lip **88** that protrudes into the cylindrical space, and upon which rests upper segment **82**. The outside of central support **86** resembles support **26** of FIG. 4A. Central support **86** has a short, ring-shaped extension **90** extending towards the inside wall of the cylindrical housing (not shown), and a narrow, cylindrical protrusion **96** protruding from the top side of the support **86**, on which is situated a flexible seal **98**. Flexible seal **98** has an inner lip **100** extending downward along the inside surface of the narrow, cylindrical protrusion **96**. Central support **86** is also provided with passageways **102** through which liquid is allowed to flow.

Around lower segment **84**, a short, ring-shaped support **104** serves as the base for a spring **106** situated around pipe segment **84** between the ring-shaped support **104** and the bottom side of support **86**. The function of the spring **106** is similar to that of outer spring **24** of FIG. 4A, but the bottom of the spring is levered against lower segment **84** instead of the bottom of the cylindrical housing, because the cylindrical pipe is made of two segments that must be held together.

One application for which a housing adaptor having a segmented cylindrical pipe is particularly appropriate is a water treatment unit in which the upper filtration compartment can be scrubbed and cleaned without having to disassemble the unit. Such water treatment units typically have a cylindrical brush that is affixed around the cylindrical pipe, and a handle situated outside the top of the filtration unit at one end, and extending down and attaching to the cylindrical pipe at the other end. By turning the handle, the cylindrical pipe and the brush affixed around the pipe are rotated, such that the brush scrubs the filter mesh, freeing the mesh of residues.

In FIG. 6, the housing adaptor **80** of FIG. 5 is equipped with a cylindrical brush **110** along the outer surface of upper segment **82** and a handle **112** as described above, to form a housing adaptor **120** for water treatment units having a self-cleaning feature.

In FIG. 7, the housing adaptor of FIG. 6 is inserted into such a water treatment unit. As in FIG. 4A, the unit has a lower polyphosphate bed compartment **315** and an upper filtration compartment **365**, in which the housing adaptor also serves as a partition between the compartments **315** and **365**.

The adaptor **120** of FIG. 6 functions much the same as housing adaptor **80** described above. However, referring again to FIG. 7, an additional feature is evident. When handle **112** is rotated, upper segment **82** is free to rotate along with it, while lower segment **84** remains stationary. Cylindrical brush **110** rotates along with upper segment **82**, such that the inner surface of the filter **114** is abraded and cleaned.

FIG. 8a illustrates an embodiment of an inner workings X of a water treatment unit having a housing adaptor mechanism, according to the present invention. The housing adaptor mechanism includes a spring **C** disposed substantially at the bottom of inner workings **X** and conveniently affixed thereto. Although various designs can be used to attach spring **C** to inner workings **X,** one simple and effective design is to force the head of spring **C** into a narrow slot **D** disposed in the bottom section of inner workings **X** (solid base **B1**).

Inner workings **X** includes a substantially cylindrical tube **F** for holding polyphosphate particles **E** or other water treatment materials.. Encompassing cylindrical tube **F** is a filtration screen **B**, which is a permeable partition designed to allow purified water to pass through, but leaving behind insoluble matter and any entrained polyphosphate particles. Filtration screen **B** has a solid base **B1,** to which spring **C** is affixed.

The housing adaptor mechanism also includes a ring seal **G** disposed substantially at the top of inner workings **X.** The function of ring seal **G** is described below.

In water treatment units having associated inner workings + housing units (i.e., designed to be complementary components), a protruding ring of the head unit (see, for example, cylindrical protrusion **96** in FIG. 5) is tightly fitted against a ring seal to seal a compartment and prevent short-circuiting. However, if the inner workings are too tall, the inner workings will not fit within the housing. If the inner workings are too short, the ring seal will not be suitably pressed against the protruding ring of the head unit, such that short-circuiting will ensue.

In FIG. 8b, inner workings **X** of the present invention are inserted into a generic housing **1** of a typical, commercially-available water treatment unit. The outer dimensions of the inner workings are sized such that both the height and the width are smaller than the "made to fit" inner workings of the prior art. Consequently, in the universal adaptor of the present invention, spring **C** presses up against solid base **B1,** such that at the top of inner workings **X,** ring seal **G** is pressed against protruding ring **16** of the head unit, thereby sealing between inner polyphosphate compartment **17** and substantially annular outer compartment **19**.

The inner workings include a substantially cylindrical tube F for holding polyphosphate particles **E** or other water treatment materials. Encompassing cylindrical tube **F** is a filtration screen **B**, which is a permeable partition designed to allow purified water to pass through, but leaving behind insoluble matter and any entrained polyphosphate particles. Filtration screen **B** has a solid base **B1,** to which spring **C** is affixed.

In above-described preferred embodiments, the bottom of cylindrical tube **F** has a slitted grating **8,** which inhibits polyphosphate particles **E** from leaving the polyphosphate compartment with the fluid.

Unlike various previous embodiments, the design of the inventive water treatment equipment provided in FIGS. 8a and 8b (and FIGS. 9a and 9b below) is such that no width compensation is necessary. Inner workings **X** are constructed with a diameter that is smaller than essentially all housings, but the gap between the outer surface of inner workings **X** does not require sealing. Rather, the substantially annular gap serves as a passageway for the treated water leaving the unit (as shown in FIGS. 8b and 9b), or for the introduction of feed water into the unit (not shown).

It must also be emphasized that spring **C** is a preferred embodiment, but is not a necessary component in most cases. If the height differential between the head (or protruding ring **16**) and the bottom of housing **1** is not appreciably larger than the height of inner workings **X,** sealing can be achieved solely by tightening the head of the unit, so as to exert pressure via protruding ring **16** on ring seal **G**. Moreover, when the above-mentioned height differential is substantial, sealing ring seal **G** can have sufficient thickness, and be made of a suitably-elastic material, so as to provide a robust fluid seal, even without spring **C.**

This arrangement obviates the need for a central feed pipe, and allows for the use of the volume taken up by the pipe for polyphosphate particles, such that the loading capacity of the unit is greatly improved.

A variation of the above-described water treatment unit is provided in FIG. 9a (inner workings) and FIG. 9b (complete water treatment unit). The main difference is that the polyphosphate bed is limited to a top compartment **J,** and the filtration unit is limited to a bottom compartment **K,** the compartments interacting by means of slitted grating **8**. Thus, after polyphosphate dissolves in top compartment **J**, the treated water passes through slitted grating **8** and into the cylindrical filtration compartment (bottom compartment **K**). As in previous figures, the water is filtered through a cylindrical filter or screen N. The purified water is then discharged from the water treatment unit.

In FIG. 9b, spring **C** presses up against solid base **B1,** such that the entire filtration compartment is pushed upward. Consequently, the top of filtration compartment pushes up against the bottom of polyphosphate compartment, such that ring seal **G** is pressed against protruding ring **16** of the head unit, thereby sealing off polyphosphate compartment **J** and preventing short-circuiting of the feed water to the purified water discharge stream.

The distance between the outer housing of the water treatment unit and the interior compartment(s) is not a crucial design parameter, as long as the annular region in between is sufficiently wide to allow unrestricted flow. Thus, by sealing the inner workings and the filtration head in the above-described manner, and by choosing a sufficiently narrow outer dimension for the interior compartment(s), no compensation means are necessary in the radial direction. In addition, the width and length of the central inlet (or outlet) on existing filtration head units are substantially of no importance, as the central inlet is not engaged by the sealing mechanism.

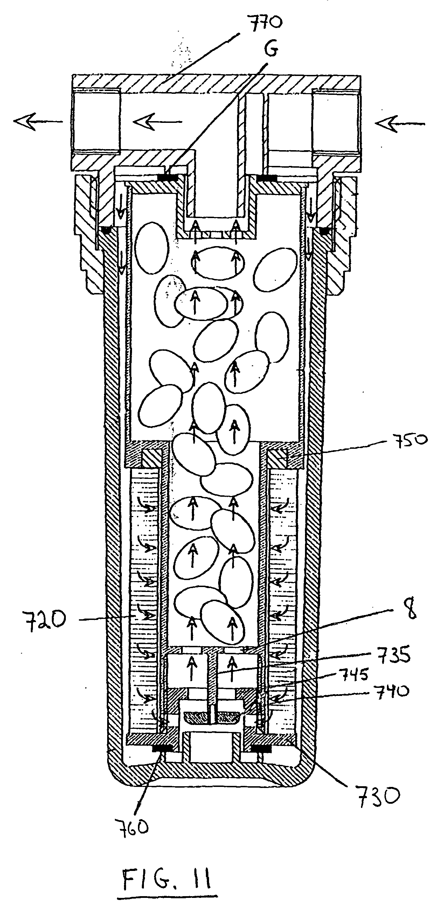

Variations of the device of FIGS. 9a-9b are shown in FIGS. 10 and 11. In FIG. 10, polyphosphate compartment **J** protrudes into the hollow of cylindrical filter or screen **N**. Because the protruding portion of polyphosphate compartment **J** fits within cylindrical screen **N**, this protruding portion has a diameter that is characteristically narrower than the diameter of polyphosphate compartment **J** above cylindrical screen **N**.

The above-described arrangement allows for a substantially improved polyphosphate loading capacity of the unit.

Moreover, the water treatment unit shown in FIG. 10 can interchangeably use a screen, or screen-type filter, in which the flow through the screen is radially outward, or a ring-type filter, in which the flow is radially inward. The water treatment unit of FIG. 11 is substantially identical to that of FIG. 10. However, a ring filter **720**, mounted on the narrow, protruding portion of polyphosphate compartment **J**, is utilized to filter the feed water. In addition, a ring filter nut **730** is disposed underneath ring filter **720**, such that pressure is applied to the bottom of ring filter **720**. Consequently, the rings in ring filter **720** are pressed sufficiently close to one another so as to achieve effective filtration. Preferably, both ring filter nut **730** and the bottom of the protruding portion of polyphosphate compartment **J** are threaded, such that ring filter nut **730** is screwed to tighten (or to loosen) ring filter **720**.

Optionally and preferably, a detachable screw **735** having a wingnut **740** is attached to slitted grating **8**, such that when ring filter nut **730** is removed (e.g., to allow washing of the rings), the rings of ring filter **720** are not accidentally dispersed. In such a case, fixture **745** will meet up with wingnut **740**. For removal of the rings, wingnut **740** is simply unscrewed.

In the event that polyphosphate compartment **J** has a recess for fitting the screen filter of FIG. 10, it is preferable to fill the recess with a detachable ring **750**, such that the pressure on ring filter **720** is more evenly distributed.

Note that the flow direction in FIG. 11 is reversed, with the feed water being introduced via the annular region between polyphosphate compartment **J**, passing through ring filter **720**, and subsequently passing through polyphosphate compartment **J** and out of housing head **770**. It is further emphasized that, by way of example, there is no spring mechanism in FIG. 11, and the height compensation between the height of the body and the height of the inner workings is achieved by means of ring seal **G** and ring seal **760**, simply by tightening housing head **770**.

While the invention has been described with respect to a limited number of embodiments, it will be appreciated that many variations, modifications and other applications of the invention may be made.

## Claims

1. A water treatment device comprising:
(a) a compartment for containing a water treatment chemical;
(b) a filtration unit operatively connected and fluidly communicating with said first compartment;
(c) a housing containing said compartment and said filtration unit;
(d) a first opening in said housing for introducing feed water into said housing;
(e) a second opening in said housing for discharging treated water therethrough, and
(f) at least one sealing element, disposed within said housing, so as to fluidly seal between said feed water and said treated water.

2. The water treatment device according to claim 1, further comprising:
(g) a spring, disposed within said housing so as to provide pressure on said at least one sealing element.

3. The water treatment device according to claim 1, wherein said at least one sealing element is disposed between said compartment and a head of said housing, to provide a fluid seal between said feed water and said treated water.

4. The water treatment device according to claim 1, wherein said compartment, said filtration unit, and said sealing element are mounted in an integral, self-contained unit for insertion to and removal from said housing.

5. The water treatment device according to claim 1, wherein said compartment and said filtration unit are substantially concentric, with said filtration unit surrounding at least a portion of said compartment.

6. The water treatment device according to claim 1, wherein substantially all of said feed water enters said compartment before undergoing filtration in said filtration unit.

7. The water treatment device according to claim 1, wherein inner workings of the water treatment device include said compartment, said filtration unit, and said sealing element, and wherein said inner workings are designed and configured so as to be substantially universally adaptable to housings of different heights and widths.

8. The water treatment device according to claim 1, wherein inner workings of the water treatment device include said compartment, said filtration unit, and said sealing element, and wherein said inner workings are designed and configured to be reversibly detachable from said housing as an integral unit.

9. The water treatment device according to claim 1, wherein said compartment is a simply connected body, for filling throughout with said water treatment chemical.

10. The water treatment device according to claim 1, wherein said filtration unit is selected from the group consisting of a screen filter and a ring filter, and wherein said inner workings are designed and configured for interchangeable connection of said screen filter and said ring filter to said inner workings.
